# EUROPÄISCHE PATENTSCHRIFT

(11) **EP 1 867 685 B1**
(45) Veröffentlichungstag und Bekanntmachung des Hinweises auf die Patenterteilung: **28.09.2011**
(21) Anmeldenummer: 06115415.9
(22) Anmeldetag: 13.06.2006
(51) Int. Cl.: C09B 47/067, C09D 11/00, C09B 67/22

(54) **Phthalocyanin-Farbstoffe, ihre Herstellung und Verwendung**
Phthalocyanin dyes, their preparation and use
Colorants phthalocyanines, leur préparation et leur utilisation

(43) Veröffentlichungstag der Anmeldung: 19.12.2007
(73) Patentinhaber: ILFORD Imaging Switzerland GmbH, 1723 Marly 1 (CH)
(72) Erfinder: Baettig, Kurt, 1724, Le Mouret (CH); Jan, Gérald, Dr., 1752, Villars-sur-Glâne (CH)

(56) Entgegenhaltungen:
- EP-A1- 1 473 335
- EP-A1- 1 475 417
- DE-B- 1 205 639
- GB-A- 2 301 109
- DATABASE WPI Week 200413 Derwent Publications Ltd., London, GB; AN 2004-126034 XP002420779 -& JP 2003 213153 A (FUJI PHOTO FILM CO LTD) 30. Juli 2003 (2003-07-30)
- DATABASE WPI Week 199748 Derwent Publications Ltd., London, GB; AN 1997-522036 XP002420780 -& JP 09 249814 A (MITSUI CHEM INC) 22. September 1997 (1997-09-22)
- CHEN FAPU ET AL: "SYNTHESIS OF WATER SOLUBLE PHTHALOCYANINES" YOUJI HUAXUE / CHINESE JOURNAL OF ORGANIC CHEMISTRY, SCIENCE PRESS, BEIJING, CN, Bd. 10, Nr. 6, 1990, Seiten 550-553, XP008074985 ISSN: 0253-2786

## Beschreibung

### Technisches Gebiet

Die Erfindung bezieht sich auf neue substituierte, wasserlösliche Phthalocyanin-Farbstoffe, die eine hervorragende Widerstandsfähigkeit gegenüber Ozon aufweisen, ihre Salze, ein Verfahren zu ihrer Herstellung, ihren Einsatz in Färbe- und Druckverfahren sowie auf Farbstoffpräparationen, die diese Farbstoffe enthalten, insbesondere wässrige Tinten für den Tintenstrahldruck.

### Stand der Technik

Heutige Tintenstrahldrucker müssen aus wirtschaftlichen Gründen immer schneller drucken können. Für solche Drucker geeignete Aufzeichnungsmaterialien müssen deshalb die Tinten besonders rasch aufnehmen können. Für diesen Zweck besonders geeignet sind Aufzeichnungsmaterialien, die nanoporöse anorganische Verbindungen, vorzugsweise Oxide, insbesondere Aluminiumoxide oder Siliziumdioxid, oder Oxid/hydroxide, insbesondere Aluminiumoxid/hydroxide, enthalten. Solche Materialien sind als "nanoporöse" Aufzeichnungsmaterialien bekannt. Besonders bevorzugt werden aus wirtschaftlichen Gründen nanoporöse Aufzeichnungsmaterialien, welche pyrogenes Siliziumdioxid mit einer positiv geladenen Oberfläche als nanoporöses, anorganisches Oxid enthalten.
Nanoporöse Aufzeichnungsmaterialien nehmen die Tinten äusserst rasch (im Mikrosekundenbereich) durch die Kapillarkräfte der nanoporösen Verbindungen auf, während Aufzeichnungsmaterialien auf Polymerbasis die Tinten langsamer (im Millisekundenbereich) durch die Quellung des Polymers aufnehmen.
Auf solche Weise hergestellte Bilder müssen eine gute Haltbarkeit auch unter ungünstigen Bedingungen aufweisen. Das ist nur mit einem auf diese nanoporösen Aufzeichnungsmaterialien fein abgestimmten System von Tinten (respektive den darin enthaltenen Farbstoffen) möglich.
Solche Aufzeichnungsmaterialien mit den meisten heute erhältlichen Tinten erfüllen nicht alle an sie gestellten Anforderungen. Insbesondere muss die Lagerbeständigkeit der auf diesen Materialien hergestellten Bilder verbessert werden. Solche Bilder sind im Kontakt mit Aussenluft, die normalerweise Verunreinigungen wie beispielsweise Ozon und/oder Stickstoffoxide enthält, nicht stabil. Sie werden im Kontakt mit der Aussenluft nämlich innerhalb kurzer Zeitspannen sehr stark verändert oder sogar zerstört. Dieses Phänomen, auch bekannt als mangelnde Ozonbeständigkeit, wird beispielsweise von P. G. Engeldrum in "Ozone Degradation of Ink Jet photo Quality Images", Journal of Imaging Science and Technology 48, 153 - 159, (2004) beschrieben.

Blaugrüntinten für den Tintenstrahldruck enthalten im allgemeinen Kupfer-Phthalocyanin-Farbstoffe wie beispielsweise Direktblau 199, Direktblau 86 oder Direktblau 87. Weitere im Tintenstrahldruck verwendete Phthalocyanin-Farbstoffe werden beispielsweise von M. Fryberg in "Dyes for Ink Jet Printing", Review of Progress in Coloration 35, 1 - 31 (2005) beschrieben.
Die dort beschriebenen Phthalocyanin-Farbstoffe vermögen in der Praxis im Tintenstrahldruck nicht alle an sie gestellten Anforderungen zu erfüllen, da die mit ihnen auf nanoporösen Aufzeichnungsmaterialien erzeugten Bilder eine schlechte Ozonbeständigkeit aufweisen.

Der Phthalocyanin-Farbstoff der Formel (I) wird in der Patentanmeldung JP 2003-213'153 (Beispiel 134) beschrieben.

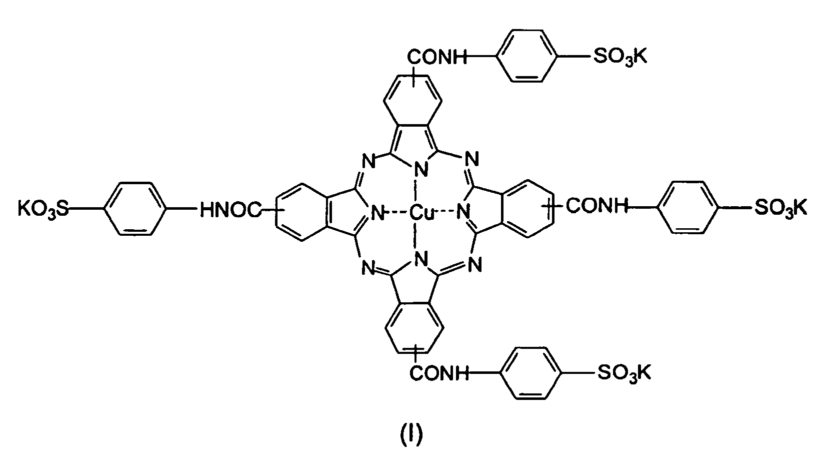

Dieser Kupferphthalocyanin-Farbstoff zeigt gegenüber den früher verwendeten Kupferphthalocyanin-Farbstoffen eine verbesserte Ozonbeständigkeit, aber sein Farbton ist zu grünlich und seine Brillanz ist mangelhaft.

Tinten für den Tintenstrahldruck müssen eine gute Löslichkeit der verwendeten Farbstoffe in der mehrheitlich wässrigen Tintenflüssigkeit aufweisen, sie müssen ins Aufnahmematerial eindringen und dürfen keine Aggregation an der Oberfläche des Aufnahmematerials zeigen ("Bronzing"). Sie müssen Bilder mit einer hohen optischen Dichte, einer guten Wasserfestigkeit, einer guten Lichtechtheit und einer guten Lagerstabilität auch unter ungünstigen Bedingungen ergeben. Sie müssen in der Tinte stabil sein, auch wenn diese lange Zeit unter ungünstigen Bedingungen gelagert wird.

Verschiedene Zusammensetzungen für Tinten sind vorgeschlagen worden. Typische Tinten enthalten einen oder mehrere Farbstoffe oder Pigmente, Wasser, organische Hilfslösungsmittel und andere Zusätze.

Die Tinten müssen die folgenden Anforderungen erfüllen:
(1) Die Tinte ergibt Bilder hochstehender Qualität auf allen möglichen Aufnahmematerialien.
(2) Die Tinte ergibt Bilder mit guter Wasserfestigkeit.
(3) Die Tinte ergibt Bilder mit guter Lichtbeständigkeit.
(4) Die Tinte ergibt Bilder mit hervorragender Abriebfestigkeit.
(5) Die Tinte ergibt Bilder mit hervorragender Lagerbeständigkeit bei hoher Temperatur und Feuchtigkeit.
(6) Die Tinte verstopft die Tintenstrahldruckerdüsen nicht, auch wenn diese längere Zeit während Druckpausen nicht abgedeckt sind.
(7) Die Tinte kann lange Zeit gelagert werden, ohne dass ihre Qualität abnimmt.
(8) Die physikalischen Eigenschaften der Tinte, wie Viskosität, Leitfähigkeit und Oberflächenspannung liegen alle innerhalb vorgegebener, für die Anwendung geeigneter Grenzen.
(9) Die Tinte muss ungiftig, unbrennbar und unschädlich sein.

Formulierungen von Blaugrün-Tinten für den Tintenstrahldruck, welche Phthalocyanin-Farbstoffe enthalten, werden beispielsweise in den Patentanmeldungen EP 1'405'883, EP 1'473'335, EP 1'475'417 und US 2003/0'041'775 beschrieben.

Es besteht deshalb weiterhin ein Bedarf für verbesserte, brillante Phthalocyanin-Farbstoffe, welche in auf nanoporösen Aufzeichnungsmaterialien hergestellten Bildern eine gute Ozonbeständigkeit zeigen und einen geeigneten, bläulichen, satten Farbton haben.

### Beschreibung der Erfindung

Wir haben nun überraschend gefunden, dass neue Phthalocyanin-Farbstoffe eine gute Ozonbeständigkeit besitzen und gleichzeitig einen geeigneten Farbton sowie eine hohe Brillanz haben.

Ziel der Erfindung ist die Bereitstellung neuer Phthalocyanin-Farbstoffe mit guter Wasserlöslichkeit, welche Bilder auf nanoporösen Aufzeichnungsmaterialien mit gutem Farbton und guter Ozonbeständigkeit ergeben, die auch bei längerer Lagerung bei hoher Lufttemperatur und Feuchtigkeit nicht oder höchstens in unbedeutendem Ausmass unscharf werden und die auch die sonst erforderlichen Eigenschaften wie hohes Chroma, gute Lichtechtheit und hohe Wasserbeständigkeit aufweisen.
Ein weiteres Ziel der Erfindung ist die Bereitstellung flüssiger Farbstoffpräparationen, welche diese Phthalocyanin-Farbstoffe enthalten, insbesondere von Tinten für den Tintenstrahldruck.

Die vorliegende Erfindung bezieht sich auf neue Phthalocyanin-Farbstoffe der allgemeinen Formel (II), 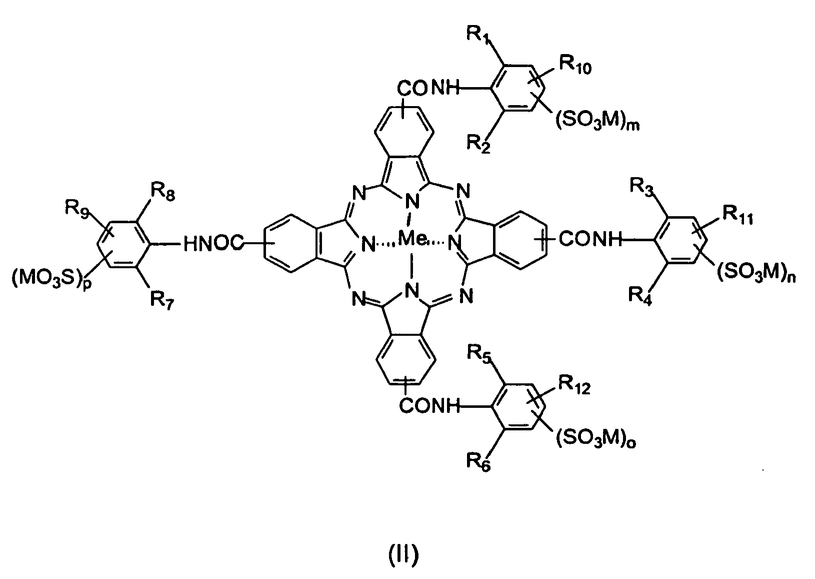 worin
- R₁ - R₈: unabhängig voneinander für einen linearen oder verzweigten Alkylrest mit bis zu 8 Kohlenstoffatomen;
- R₉ - R₁₂: unabhängig voneinander für Wasserstoff, einen lineare oder einen ver- zweigten Alkylrest mit bis zu 8 Kohlenstoffatomen oder ein Halogen- atom;
- Me: für Kupfer, Zink, Nickel, Mangan, Kobalt, Aluminium oder Vanadium;
- M: für Wasserstoff, ein Metallkation oder ein aromatisches Ammoniumkation, das gegebenenfalls einen oder mehrere Alkylreste aufweist oder ein aliphatisches Ammoniumkation, das gegebenenfalls einen oder mehrere Alkylreste oder substituierte Alkylreste oder Hydroxyalkoxyalkylreste mit jeweils 1 bis 18 Kohlenstoffatomen aufweist, stehen
und
- m, n , o, p: unabhängig voneinander den Wert 1 oder 2 annehmen.

Bevorzugt sind die Phthalocyanin-Farbstoffe, bei denen Me für Kupfer (Cu) oder Zink (Zn) steht.

Ebenfalls bevorzugt sind die Phthalocyanin-Farbstoffe, bei denen m, n, o und p den Wert 1 annehmen.

Besonders bevorzugt sind die symmetrischen Phthalocyanin-Farbstoffe der allgemeinen Formel (III), die um das Zentralatom Me herum 4 gleiche Gruppen angeordnet haben. In diesen Farbstoffen nehmen m, n, o und p den gleichen Wert an. Die Substituenten R₁, R₃, R₅ und R₇ sind identisch, ebenso die Substituenten R₂, R₄, R₆ und R₈ wie auch die Substituenten R₉, R₁₀, R₁₁ und R₁₂. R₁, R₂, R₁₀, Me und m haben die gleiche Bedeutung wie vorhin angegeben.

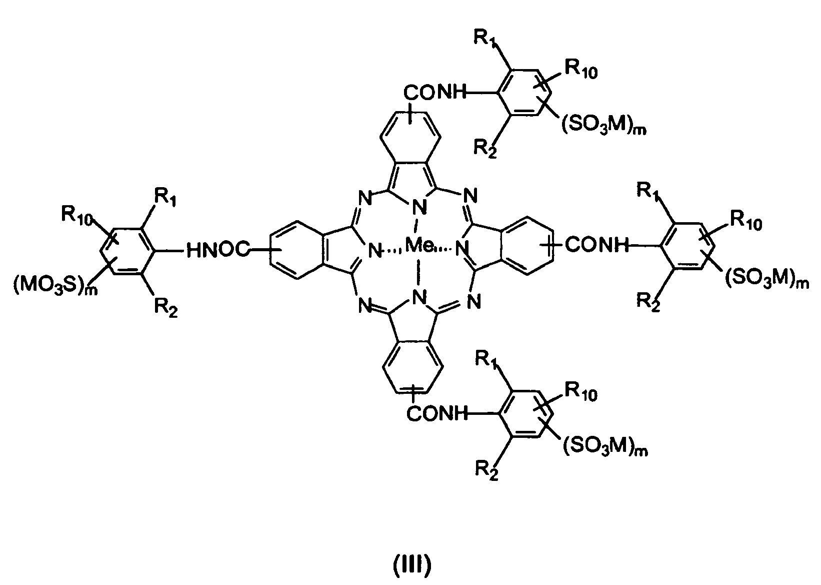

Die Erfindung bezieht sich auch auf ein Verfahren zur Herstellung der erfindungsgemässen Phthalocyanin-Farbstoffe der allgemeinen Formel (II), das dadurch gekennzeichnet ist, dass
ein aromatisches Amin der allgemeinen Formel (IV A), 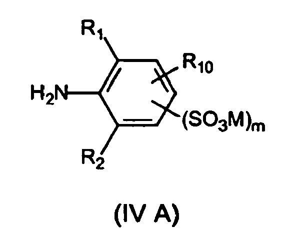 worin R₁, R₂, R₁₀ und m die gleiche Bedeutung wie vorhin angegeben haben,
der allgemeinen Formel (IV B), 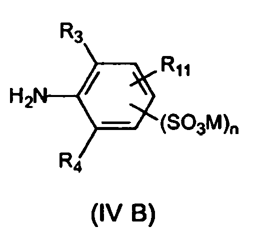 worin R₃, R₄, R₁₁ und n die gleiche Bedeutung wie vorhin angegeben haben,
der allgemeinen Formel (IV C), 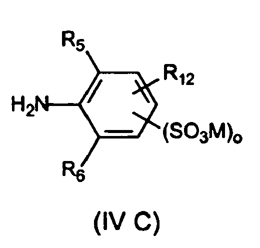 worin R₅, R₆, R₁₂ und o die gleiche Bedeutung wie vorhin angegeben haben,
und
der allgemeinen Formel (IV D), 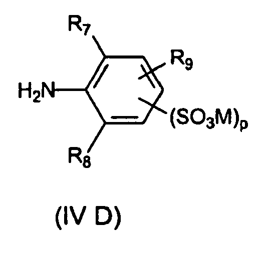 worin R₇, R₈, R₉ und p die gleiche Bedeutung wie vorhin haben,
mit dem Carbonsäurechlorid der Formel (V) 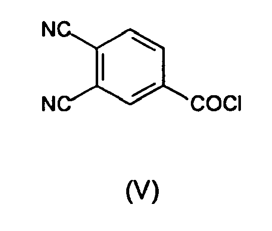 unter Bedingungen umgesetzt werden, dass die Amide der allgemeinen Formeln 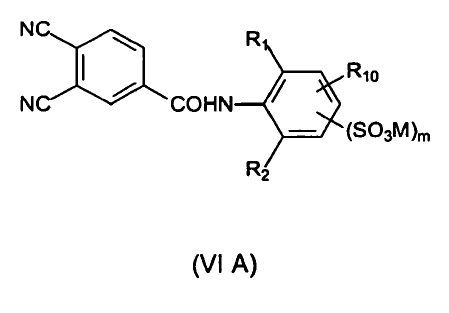 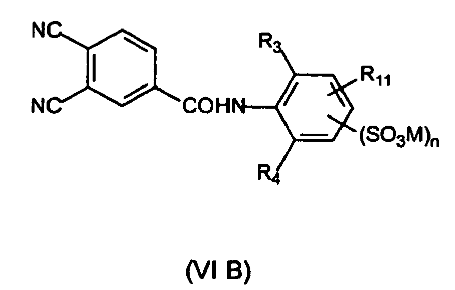 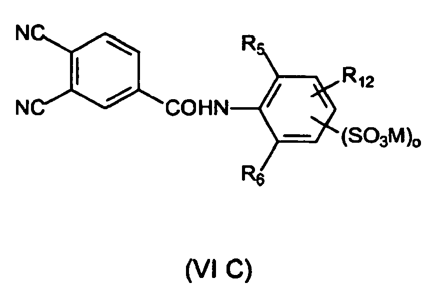 und 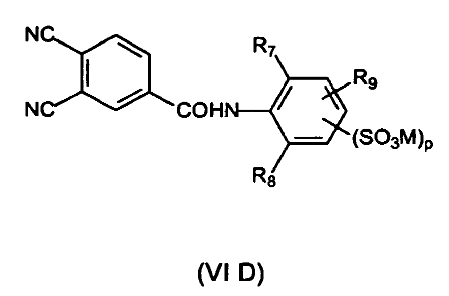 gebildet werden.

Zur Herstellung der asymmetrischen Phthalocyanin-Farbstoffe der allgemeinen Formel (II) wird ein Gemisch der Amide (VI A), (VI B), (VI C) und (VI D) mit einem Salz des Metalls Me umgesetzt.
Geeignete Bedingungen für die Umsetzung werden beispielsweise von M. Hanack, H. Heckmann und R. Polley in "Phthalocyanines and Related Compounds", Band E 9d, Seiten 717 - 842 von Houben-Weyl, "Methods of Organic Chemistry", Georg Thieme Verlag Stuttgart - New York (1998), ISBN 3-13-101614-0 beschrieben.

Zur Herstellung der symmetrischen Phthalocyanin-Farbstoffe der allgemeinen Formel (III) wird das Amid der allgemeinen Formel (VI A) mit einem Salz des Metalls Me umgesetzt.

Spezifische Beispiele von Phthalocyanin-Farbstoffen der allgemeinen Formel (III) sind die folgenden: 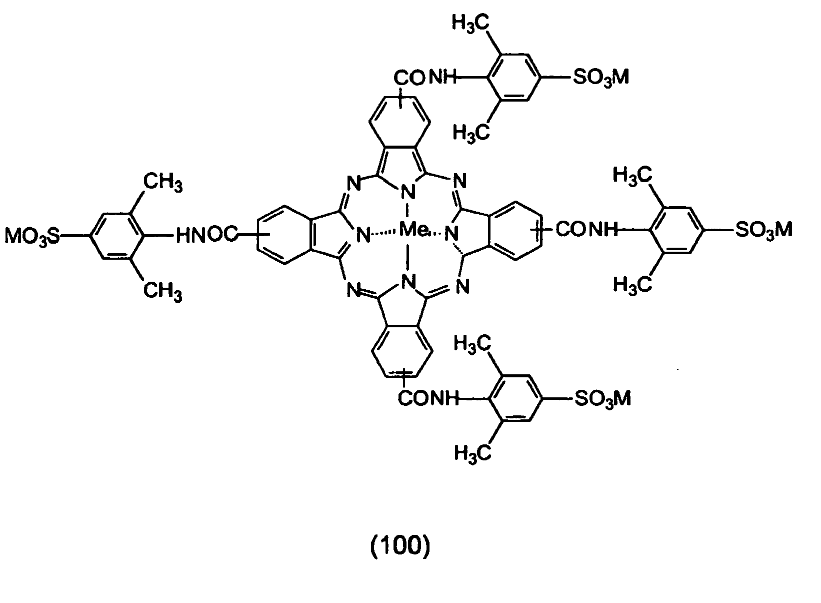 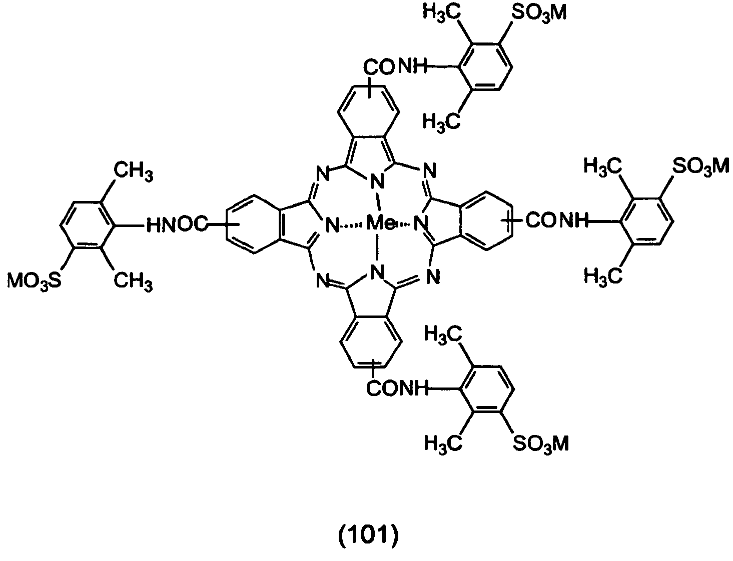 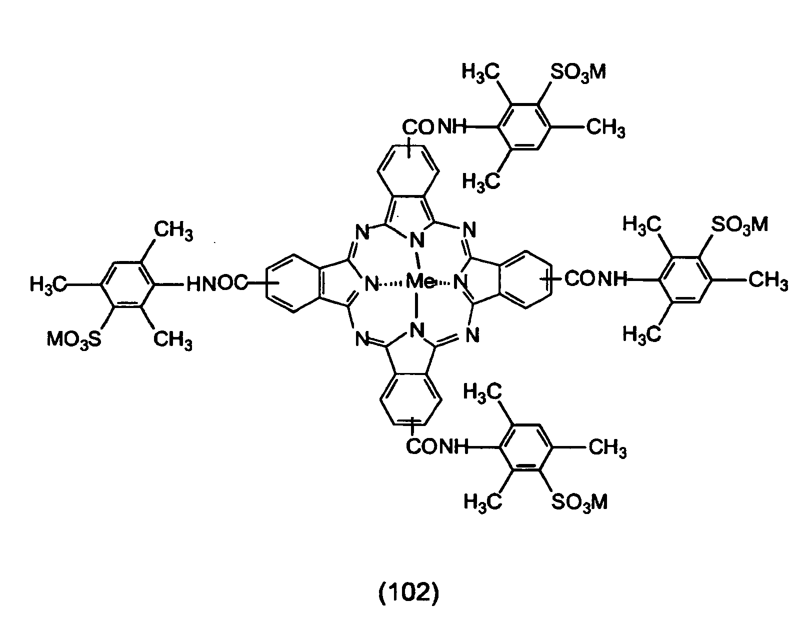 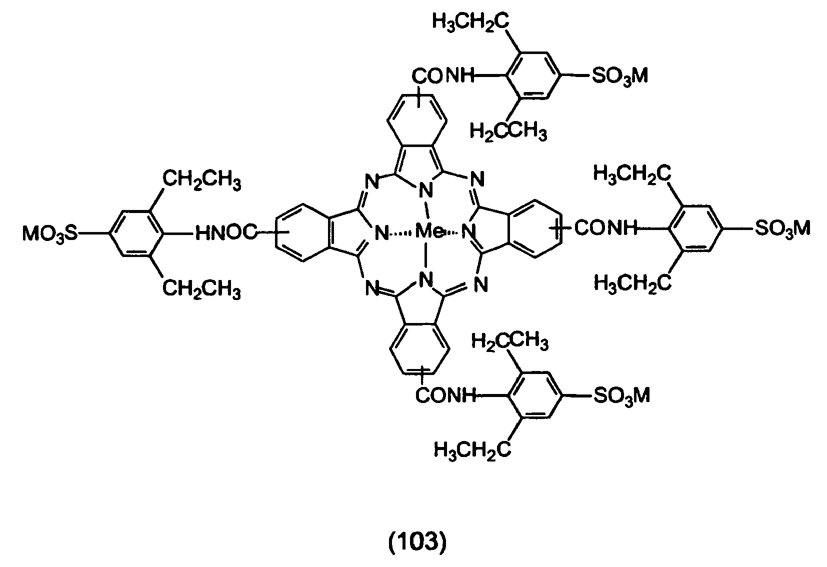 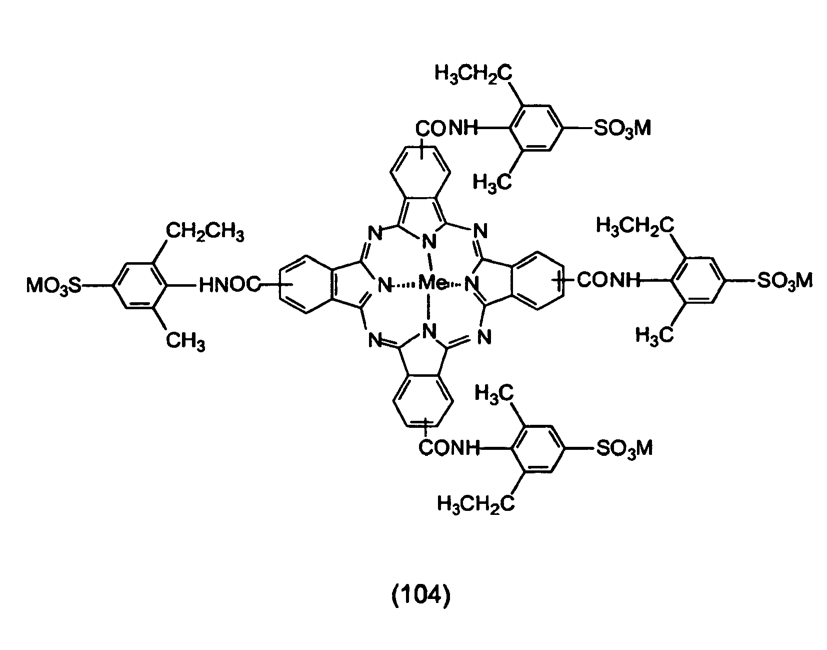 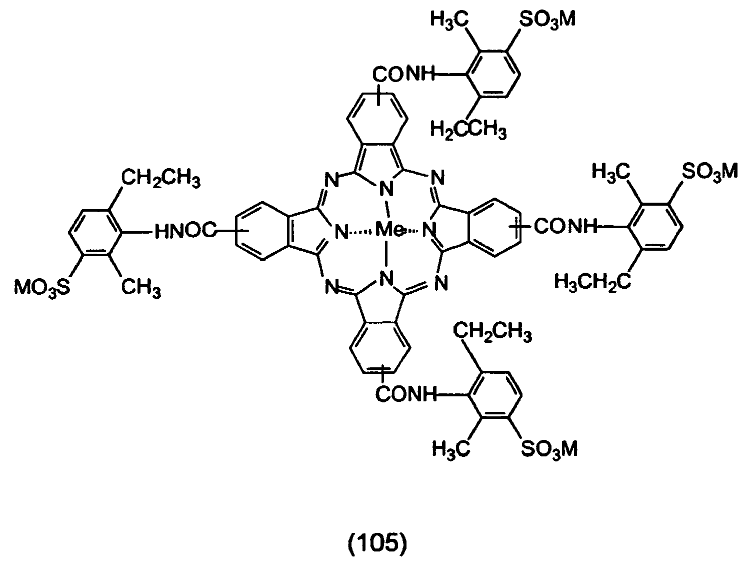 und

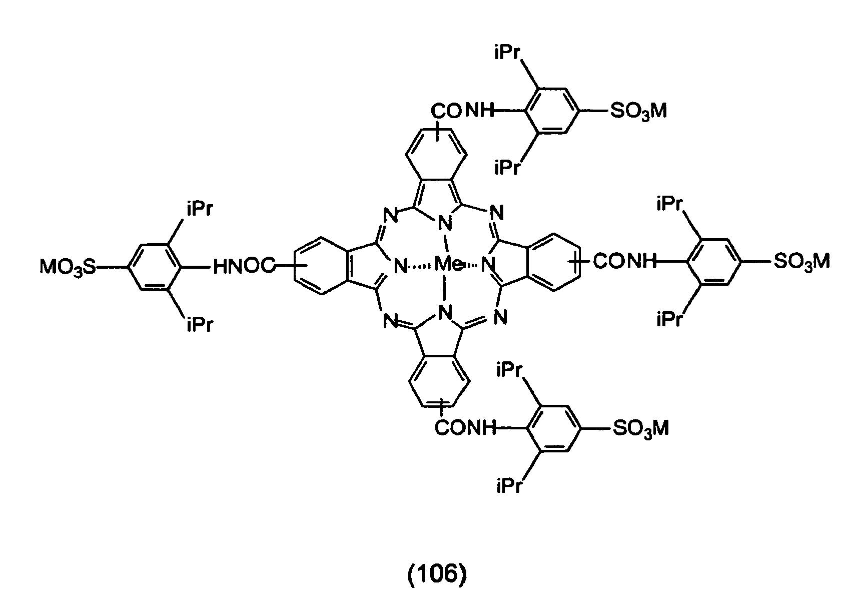

Das zentrale Metallatom Me ist entweder Kupfer oder Zink, es wird in Tabelle 1 spezifiziert.

Die Phthalocyanin-Farbstoffe der allgemeinen Formeln (II) und (III) können als freie Säuren oder als anorganische oder organische Salze dieser Säuren vorliegen. Vorzugsweise liegen sie in Form ihrer Alkali- oder Ammoniumsalze oder deren Gemische vor, wobei das Ammoniumkation substituiert sein kann. Beispiele solcher substituierter Ammoniumkationen sind 2-Hydroxyethylammonium, Bis-(2-hydroxyethyl)-ammonium, Tris-(2-hydroxyethyl)-ammonium, Bis-(2-hydroxyethyl)-methyl-ammonium, Tris-[2-(2-methoxyethoxy)-ethyl]-ammonium, 8-Hydroxy-3,6-dioxaoctylammonium, 1,8-Diazabicyclo(5.4.0)undec-7-en, 1,4-Diazabicyclo-(2.2.2)octan und Tetraalkylammonium wie beispielsweise Tetramethylammonium oder Tetrabutylammonium oder Pyridinium.

Weiter betrifft die Erfindung nicht nur reine Phthalocyanin-Farbstoffe der allgemeinen Formeln (II) und (III), sondern auch Gemische dieser Phthalocyanin-Farbstoffe.

Die erfindungsgemässen Phthalocyanin-Farbstoffe der allgemeinen Formeln (II) und (III) färben cellulosehaltige Materialien, Papier, Baumwolle und Viskose sowie Leder und Wolle mit guten Nass- und Lichtechtheiten.
Die Phthalocyanin-Farbstoffe können nach allen in der Papier- und Textilindustrie für Substantivfarbstoffe gebräuchlichen Verfahren verwendet werden, insbesondere in der Massen- wie in der Oberflächenbehandlung von Papier für geleimte oder ungeleimte Sorten. Sie können auch in der Garn- und Stückfärberei von Baumwolle, Viskose und Leinen nach dem Ausziehverfahren oder im kontinuierlichen Verfahren angewandt werden.
Die Erfindung betrifft weiter flüssige Farbstoffpräparationen, die mindestens einen Phthalocyanin-Farbstoff der allgemeinen Formeln (II) und/oder (III) enthalten. Diese Anwendungsform ist insbesondere beim Färben von Papier bevorzugt. Die Herstellung von stabilen, flüssigen, vorzugsweise wässrigen, konzentrierten Färbepräparaten kann auf allgemein bekannte Weise erfolgen, vorteilhaft durch Lösen in geeigneten Lösungsmitteln. Von besonderem Vorteil ist die Herstellungsmöglichkeit solcher stabilen, wässrig-konzentrierten Präparationen im Zuge der Farbstoffsynthese selbst ohne Zwischenisolierung des Farbstoffs, beispielsweise nach einer Entsalzung der Reaktionslösung durch Diafiltration.

Phthalocyanin-Farbstoffe oder Mischungen von Phthalocyanin-Farbstoffen der allgemeinen Formeln (II) und (III) sind ausgezeichnete Farbstoffe zur Herstellung von Blaugrün-Tinten für den Tintenstrahldruck.

Die erfindungsgemässen Phthalocyanin-Farbstoffe der allgemeinen Formeln (II) und (III) können auch mit anderen Phthalocyanin-Farbstoffen, insbesondere Direktblau 199, Direktblau 86, Direktblau 87, Säureblau 9 und anderen, welche von M. Fryberg in "Dyes for Ink Jet Printing", Review of Progress in Coloration 35, 1 - 31 (2005) beschrieben werden, kombiniert werden.

Eine solche Blaugrün-Tinte enthält eine oder mehrere der erfindungsgemässen Phthalocyanin-Farbstoffe in einem flüssigen wässrigen Lösungsmittel. Die Tinte enthält 0.5 Gewichtsprozent bis 20 Gewichtsprozent, vorzugsweise 0.5 Gewichtsprozent bis 8 Gewichtsprozent dieser Phthalocyanin-Farbstoffe bezogen auf das Gesamtgewicht der Tinte. Das flüssige Lösungsmittel besteht vorzugsweise aus Wasser oder aus einer Mischung von Wasser und mit Wasser mischbaren organischen Lösungsmitteln. Geeignete Lösungsmittel werden beispielsweise in den Patenten US 4'626'284, US 4'703'113 und US 4'963'189 und den Patentanmeldungen GB 2'289'473, EP 0'425'150 und EP 0'597'672 beschrieben.

Die vorliegende Erfindung wird durch die folgenden Beispiele näher beschrieben, ohne dass dadurch die beanspruchten Phthalocyanin-Farbstoffe in irgendeiner Weise eingeschränkt werden.

### Beispiele

### Beispiel 1

Der symmetrische Kupfer-Phthalocyanin-Farbstoff (100) wurde folgendermassen hergestellt:
6.7 g (30 mMol) des Anilins der Formel (VII), 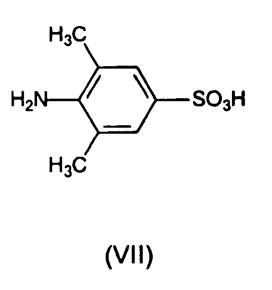 hergestellt nach dem von G. P. Britovsek, G. Y. Y. Woo und N. Assavathorn in "Synthesis and reactivity of water-soluble platinum(II) complexes containing nitrogen ligands", Journal of Organometallic Chemistry 679, 110 - 115 (2003) beschriebenen Verfahren, werden in 25 ml Pyridin suspendiert.
Zu dieser Suspension wird unter Rühren während 10 Minuten 5.7 g (30 mMol) des Säurechlorids der Formel (VIII), 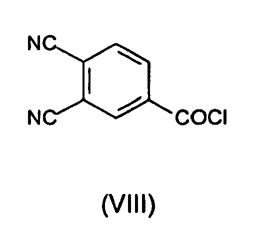 hergestellt nach dem von J. J. He, G. Benkö, F. Korodi, T. Polivka, R. Lomoth, B. Åkermak, L. Sun, A Hagfeldt und V. Sundström in "Modified Phthalocyanines for Efficient Near-IR Sensitization of Nanostructured TiO2 Electrode", Journal of the American Chemical Society 124, 4922 - 4932 (2002) beschriebenen Verfahren, gelöst in 8 ml Ethylacetat, unter Kühlung mit Eis so zugetropft, dass die Temperatur 30° C nicht übersteigt. Nach Ende der Zugabe wird der Ansatz 18 Stunden bei Raumtemperatur nachgerührt. Anschliessend wird das Gemisch mit 40 ml Ethylacetat verdünnt und das ausgefallene Produkt abgenutscht. Das Rohprodukt wird durch Umkristallisation in 140 ml Methanol gereinigt. Nach Trocknung erhält man 7.2 g des Amids der Formel (IX) 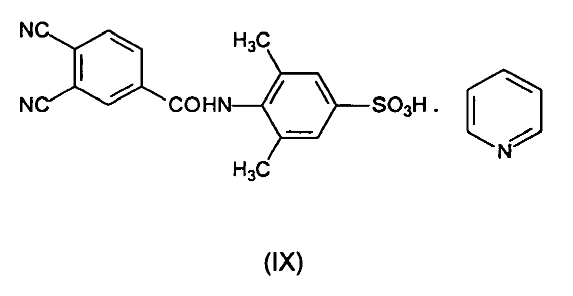 7.0 g (16 mmol) des Amids der Formel (IX), 0.8 g (4 mMol) Kupferacetat-Monohydrat und 2.4 g 1,8-Diazabicyclo(5.4.0)undec-7-en in 20 ml Formamid werden während 5 Stunden bei einer Temperatur von 100 °C gerührt. Dann wird die tiefblaue Lösung auf Raumtemperatur gekühlt, mit 30 ml Methanol verdünnt, der Farbstoff als Natrium-Salz durch Zugabe von 3.0 g Natriumacetat ausgefällt und der Niederschlag abfiltriert. Man erhält so 3.7 g des Phthalocyanin-Farbstoffs (100) in der Form seines Natrium-Salzes.

Anstelle von 1,8-Diazabicyclo(5.4.0)undec-7-en kann auch eine andere starke organische Base wie beispielsweise 1,4-Diazabicyclo(2.2.2)octan verwendet werden. Anstelle von Natriumacetat kann auch das Acetat oder das Chlorid eines anderen Alkalimetalls, wie beispielsweise Kaliumacetat oder Lithiumchlorid, verwendet werden, wobei dann natürlich der Phthalocyanin-Farbstoff in Form des Kaliumbeziehungsweise Lithium-Salzes anfällt.

Auf ähnliche Art und Weise können durch die Wahl geeigneter Mengen anderer Ausgangsmaterialien die erfindungsgemässen symmetrischen Farbstoffe (101) bis (106) hergestellt werden.

### Beispiel 2

Ein asymmetrischer Kupfer-Phthalocyanin-Farbstoff wurde folgendermassen hergestellt:

7.7 g (30 mMol) des Anilins der Formel (X), 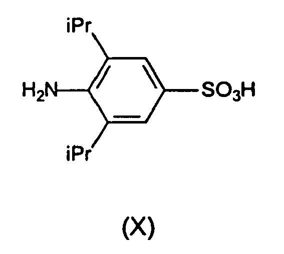 hergestellt nach dem von G. P. Britovsek, G. Y. Y. Woo und N. Assavathom in "Synthesis and reactivity of water-soluble platinum(II) complexes containing nitrogen ligands", Journal of Organometallic Chemistry 679, 110 - 115 (2003) beschriebenen Verfahren, werden in 30 ml Pyridin suspendiert.
Zu dieser Suspension werden unter Rühren während 10 Minuten 5.7 g (30 mMol) des Säurechlorids der Formel (VIII), gelöst in 8 ml Ethylacetat, unter Kühlung mit Eis so zugetropft, dass die Temperatur 30° C nicht übersteigt. Nach Ende der Zugabe wird der Ansatz 18 Stunden bei Raumtemperatur nachgerührt. Anschliessend wird das Gemisch mit 20 ml N-Methylpyrrolidon und 20 ml Ethylacetat verdünnt, klarfiltriert, und das Filtrat eingeengt. Das Rohprodukt wird durch Verrühren mit 50 ml gesättigter Kochsalzlösung gereinigt. Nach Trocknung erhält man 6.7 g des Amids der Formel (XI)

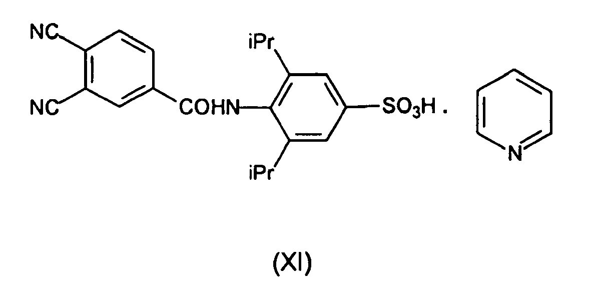

3.5 g (8 mMol) des Amids der Formel (X) und 3.9 g (8 mMol) des Amids der Formel (XI), 0.8 g (4 mMol) Kupferacetat-Monohydrat und 2.4 g 1,8-Diazabicyclo(5.4.0)undec-7-en in 20 ml Formamid werden während 5 Stunden bei einer Temperatur von 100 °C gerührt. Dann wird die tiefblaue Lösung auf Raumtemperatur abgekühlt, mit 30 ml Methanol verdünnt, der Farbstoff als Natrium-Salz durch Zugabe von 3 g Natriumacetat ausgefällt und der Niederschlag abfiltriert. Man erhält so 3.3 g eines Phthalocyanin-Farbstoffgemisches in Form seines Natrium-Salzes.

Dieses Phthalocyanin-Farbstoffgemisch enthält unter anderen den Phthalocyanin-Farbstoff der Formel 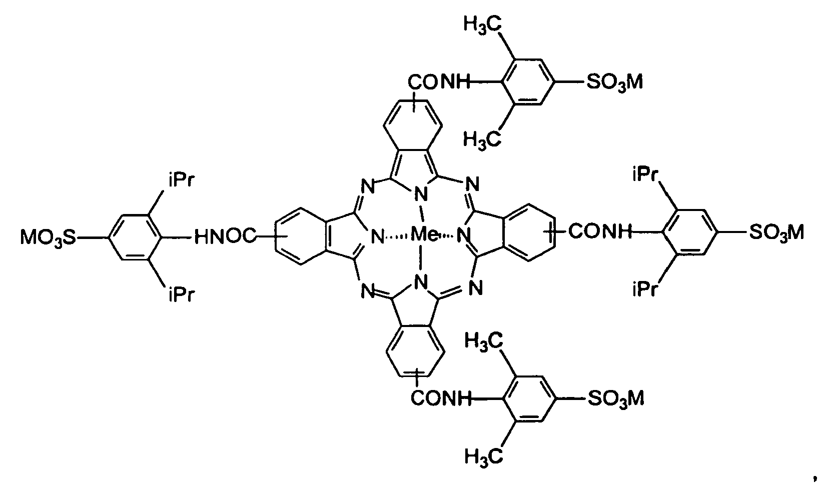 den Phthalocyanin-Farbstoff der Formel 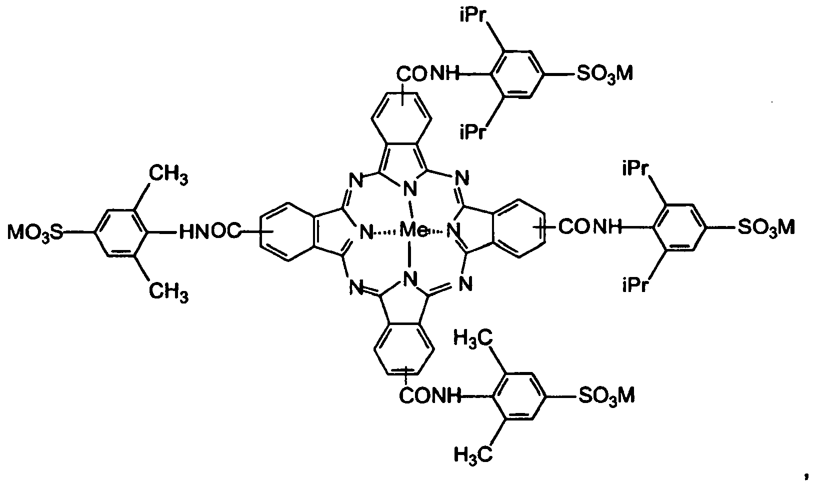 den Phthalocyanin-Farbstoff der Formel 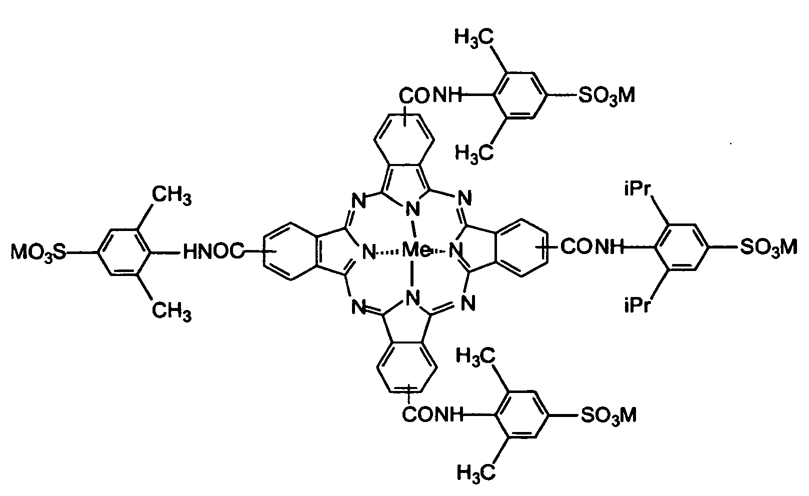 und den Phthalocyanin-Farbstoff der Formel 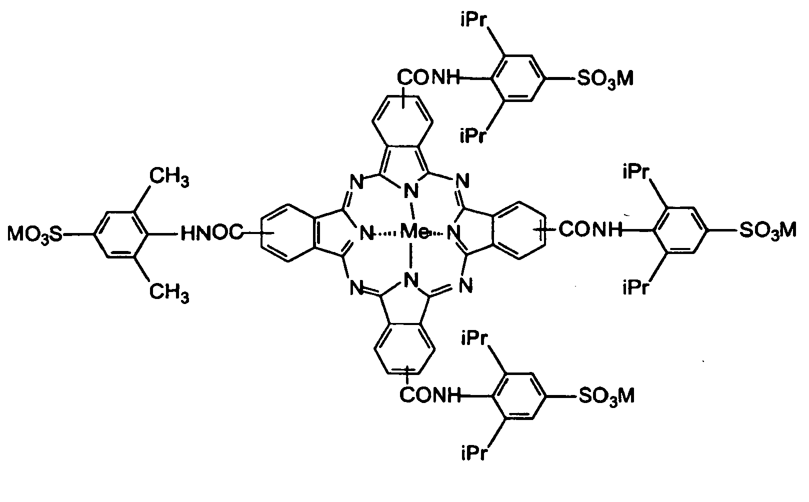 In den vorangehenden 4 Formeln steht Me für Kupfer.

### Herstellungsbeispiel für Tinten

Die vorliegende Erfindung wird, soweit sie sich auf Tinten bezieht, durch das folgende Beispiel beschrieben, in denen der erfindungsgemässe Phthalocyanin-Farbstoff (100) und der Phthalocyanin-Farbstoff der Formel (I) des Stands der Technik eingesetzt werden. Mit jedem Phthalocyanin-Farbstoff werden 100 g Tinte hergestellt, indem die benötigte Menge Phthalocyanin-Farbstoff (4 - 8 g), Ethylenglykol (12 g), Propylenglykol (6 g), N-Methylpyrrolidon (6 g), Tergitol 15-S-7 (erhältlich bei Union Carbide Co., Houston, USA) (0.5 g) und eine Lösung des Biocids Mergal K 10N (erhältlich bei Riedel-de-Haën, Seelze, Deutschland) (0.2 g) zusammen mit Wasser etwa 1 Stunde unter Rühren auf eine Temperatur von 50° C erwärmt werden. Die erhaltene Lösung wird auf eine Temperatur von 20° C abgekühlt und ihr pH-Wert auf 7.5 eingestellt. Anschliessend wird die Lösung durch ein Millipore^{®}-Filter mit einem Porendurchmesser von 0.5 µm abfiltriert. Die Farbstoffmenge wird so gewählt, dass die optische Dichte des bedruckten Bildes für die beiden Phthalocyanin-Farbstoffe möglichst gleich ist.

### Anwendungsbeispiele von Tinten

Die Tinten werden anschliessend mit Hilfe eines Tintenstrahldruckers des Typs Canon 8500 auf die nanoporösen Aufzeichnungsmaterialien ILFORD Galerie® Smooth Gloss Paper IGSGP9 und ILFORD Printasia® Premium Photo Glossy Paper PRNGP1 aufgebracht, wobei quadratische Farbfelder mit einer Fläche von 1 cm² gedruckt werden. Die bedruckten Muster werden 24 Stunden bei einer relativen Luftfeuchtigkeit von etwa 60 % getrocknet. Anschliessend werden die Remissionsspektren und die Ozonbeständigkeit an den bedruckten Mustern bestimmt.

### Prüfungen

1. Absorptionsmaximum in wässriger Lösung
   Die Absorptionsmaxima in wässriger Lösung wurden bei einer Konzentration von 20 bis 30 mg/l Farbstoff in einer Zelle mit einer Dicke von 1cm mit einem Spektrometer Kontron Uvikon^{®} bei einem pH-Wert von 7.0 gemessen.
2. Spektrale Absorption auf nanoporösen Aufzeichnungsmaterialien
   Die spektrale Absorption der Farbfelder mit einer Dichte zwischen 1.3 - 1.5 wird mit einem Remissionsdensitometer Spectrolino^{®} der Firma Gretag Macbeth, Regensdorf, Schweiz aufgezeichnet. Anschliessend werden die Absorptionsspektren normiert.
3. Ozonbeständigkeit im Dunkeln
   Die optische Dichte der quadratischen Farbfelder wird mit einem Densitometer Spectrolino^{®} der Firma Gretag Macbeth, Regensdorf, Schweiz gemessen. Anschliessend werden die bedruckten Muster in einer Ozonkammer, Modell 903, der Firma Satra/Hampden, Grossbritannien, bei einer Temperatur von 30° C, einer relativen Luftfeuchtigkeit von 50 % und einer Ozonkonzentration von 1 ppm bei einer Geschwindigkeit der zirkulierenden, ozonhaltigen Luft von 13 mm/s während einer bestimmten Zeit (beispielsweise 12 Stunden) gelagert. Nach abgeschlossener Lagerung werden die Muster erneut ausgemessen. Die Dichteunterschiede in Prozenten vor und nach der Lagerung sind ein Mass für das Ausmass des Farbstoffverlusts durch die Einwirkung des Ozons.

### Kurze Beschreibung der Zeichnungen

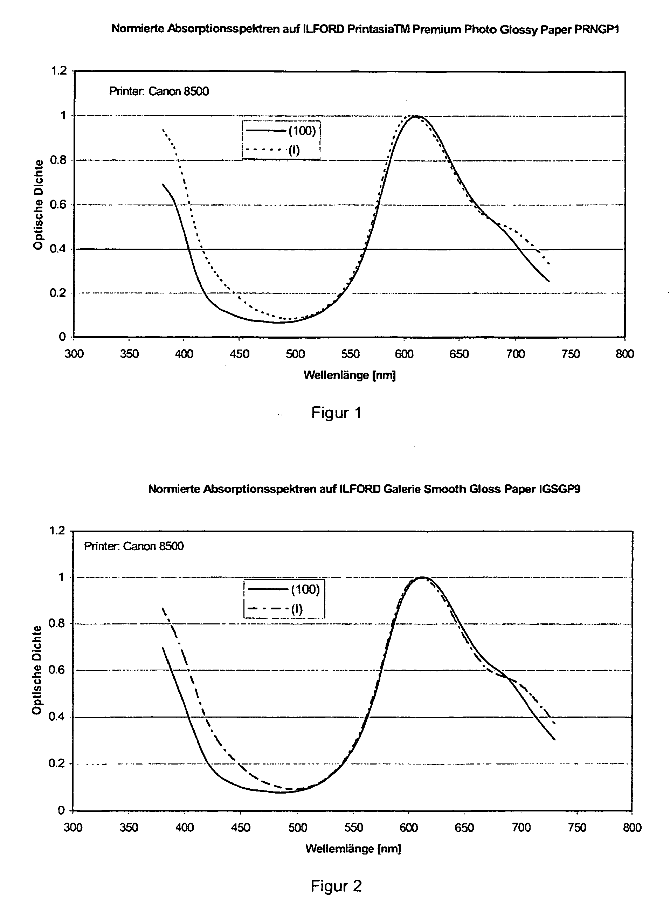

Die normierten Absorptionsspektren des erfindungsgemässen Farbstoffs (100) und des Farbstoffs der Formel (I) auf dem nanoporösen Aufzeichnungsmaterial ILFORD Printasia® Premium Photo Glossy Paper PRNGP1 sind in Figur 1 aufgezeichnet.
Die normierten Absorptionsspektren des erfindungsgemässen Farbstoffs (100) und des Farbstoffs der Formel (I) auf dem nanoporösen Aufzeichnungsmaterial ILFORD Galerie® Smooth Gloss Paper IGSGP9 sind in Figur 2 aufgezeichnet.

### Ergebnisse

Die gemessenen Absorptionsmaxima der erfindungsgemässen Phthalocyanin-Farbstoffe sind mit verschiedenen Metallen Me und verschiedenen M-lonen in Tabelle 1 zusammengestellt.

**Tabelle 1**

| Farbstoff Nr. | Me | M | λₘₐₓ in H₂O (nm) |
|---|---|---|---|
| 100 | Cu | K | 601 |
| 101 | Cu | Na | 617 |
| 101 | Cu | Li | 616 |
| 101 | Cu | K | 617 |
| 102 | Cu | Na | 622 |
| 102 | Cu | Li | 621 |
| 103 | Cu | Na | 585 |
| 104 | Cu | Na | 605 |
| 105 | Cu | Na | 614 |
| 105 | Cu | Li | 614 |
| 106 | Cu | Na | 681 |
| 101 | Zn | K | 639 |

Das Absorptionsmaximum des Farbstoff (106) wurde in einer 1 : 1 - Mischung von Wasser und N-Methylpyrrolidon gemessen.

Ein Vergleich der normierten Absorptionsspektren zeigt klar, dass der erfindungsgemässe Phthalocyanin-Farbstoff (100) zwischen den Wellenlängen von 400 nm und 500 nm eine wesentlich geringere Nebenabsorption als der Phthalocyanin-Farbstoff der Formel (I) des Stands der Technik hat. Damit hat der erfindungsgemässe Phthalocyanin-Farbstoff (100) auf den nanoporösen Aufzeichnungsmaterialien ILFORD Galerie® Smooth Gloss Paper IGSGP9 und ILFORD Printasia® Premium Photo Glossy Paper PRNGP1 den gewünschten bläulicheren Farbton im Vergleich zum Phthalocyanin-Farbstoff der Formel (I) des Stands der Technik, welcher einen viel grünlicheren, unerwünschten Farbton zeigt. Weiter ist der erfindungsgemässe Phthalocyanin-Farbstoff (100) wesentlich brillanter als der Phthalocyanin-Farbstoff der Formel (I) des Stands der Technik.

In der Praxis bedeutet dieses Ergebnis, dass mit den erfindungsgemässen ozonbeständigen Phthalocyanin-Farbstoffen im Tintenstrahldruck Originale mit reinen, satten blauen Farbtönen viel besser wiedergegeben werden können als mit dem ebenfalls ozonbeständigen Phthalocyanin-Farbstoff der Formel (I) des Stands der Technik, mit dem nur stumpfe, grünliche blaue Farbtöne erhalten werden können.

Die bestimmten Werte für die Farbstoffverluste bei einem Tintenauftrag von 80 % durch die Ozoneinwirkung auf dem Aufzeichnungsmaterial ILFORD Galerie® Smooth Gloss Paper IGSGP9 nach 24 Stunden Lagerung sind in Tabelle 2 aufgeführt.

**Tabelle 2**

| Farbstoff Nr. | Prozentualer Dichteverlust |
|---|---|
| (100) | 11 |
| (I) | 10 |

Die bestimmten Werte für die Farbstoffverluste bei einem Tintenauftrag von 80 % durch die Ozoneinwirkung auf dem Aufzeichnungsmaterial ILFORD Printasia® Premium Photo Glossy Paper PRNGP1 nach 24 Stunden Lagerung sind in Tabelle 3 aufgeführt.

**Tabelle 3**

| Farbstoff Nr. | Prozentualer Dichteverlust |
|---|---|
| (100) | 7 |
| (I) | 8 |

Ein Vergleich der gemessenen Farbstoffverluste in den Tabellen 2 und 3 zeigt, dass Tinten mit dem erfindungsgemässen Phthalocyanin-Farbstoff (100) eine ebenso gute Ozonbeständigkeit zeigen wie Tinten, welche den bekannten Phthalocyanin-Farbstoff der Formel (I) mit einem zu grünlichen Farbton enthalten.

In der Praxis bedeutet dieses Ergebnis, dass mit den erfindungsgemässen Phthalocyanin-Farbstoffen im Tintenstrahldruck Bilder mit guter Ozonbeständigkeit und einem reinen, satten blauen Farbton erhalten werden können und nicht, wie mit den ozonbeständigen Phthalocyanin-Farbstoffen des Standes der Technik, mit stumpfen, grünlichen Farbtönen.

## Patentansprüche

1. Phthalocyanin-Farbstoffe der allgemeinen Formel (II) 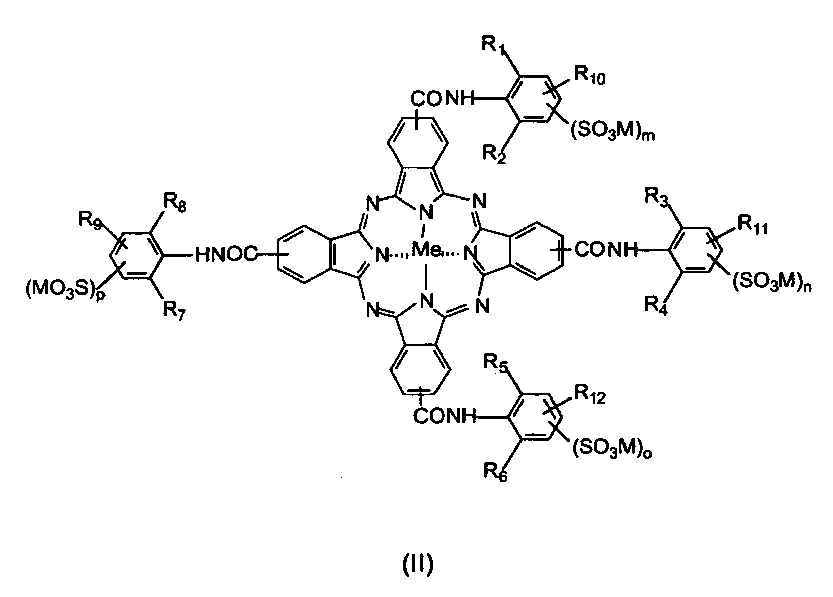 worin
R₁ - R₈ unabhängig voneinander für einen linearen oder einen verzweig- ten Alkylrest mit bis zu 8 Kohlenstoffatomen;
R₉ - R₁₂ unabhängig voneinander für Wasserstoff, einen linearen oder ei- nen verzweigten Alkylrest mit bis zu 8 Kohlenstoffatomen oder ein Halogenatom;
Me für Kupfer, Zink, Nickel, Mangan, Kobalt, Aluminium oder Vanadi- um;
M für Wasserstoff, ein Metallkation oder ein aromatisches Ammoni- umkation, das gegebenenfalls einen oder mehrere Alkylreste auf- weist oder ein aliphatisches Ammoniumkation, das gegebenenfalls einen oder mehrere Alkylreste oder substituierte Alkylreste oder Hydroxyalkoxyalkylreste mit jeweils 1 bis 18 Kohlenstoffatomen aufweist, stehen
und
m, n , o, p unabhängig voneinander den Wert 1 oder 2 annehmen.

2. Phthalocyanin-Farbstoffe gemäss Anspruch 1, **dadurch gekennzeichnet, dass** R₁ - R₈, R₉ - R₁₂, Me und M die gleiche Bedeutung wie in Anspruch 1 haben
und
m, n , o, p den Wert 1 annehmen.

3. Phthalocyanin-Farbstoffe gemäss Anspruch 1, **dadurch gekennzeichnet, dass** R₁ - R₈, R₉ - R₁₂, m, n, o, p und M die gleiche Bedeutung wie in Anspruch 1 haben
und
Me für Kupfer oder Zink steht.

4. Phthalocyanin-Farbstoffe der allgemeinen Formel (III) gemäss Anspruch 1, 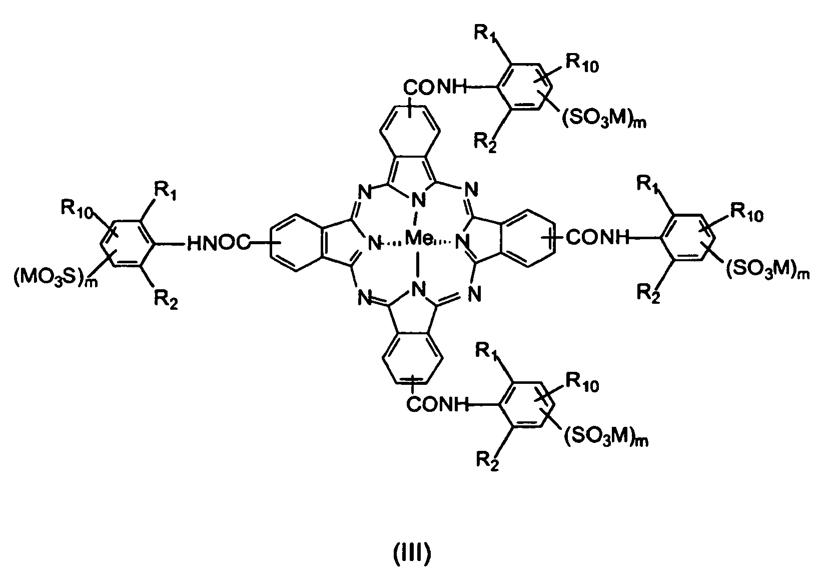
worin R₁, R₂, R₁₀, Me, M und m die gleiche Bedeutung wie in Anspruch 1 haben.

5. Phthalocyanin-Farbstoffe gemäss Anspruch 4, **dadurch gekennzeichnet, dass** R₁, R₂, R₁₀, Me und M die gleiche Bedeutung wie in Anspruch 4 haben
und
m den Wert 1 annimmt.

6. Phthalocyanin-Farbstoffe gemäss Anspruch 4, **dadurch gekennzeichnet, dass** R₁, R₂, R₁₀, m und M die gleiche Bedeutung wie in Anspruch 4 haben und
Me für Kupfer oder Zink steht.

7. Verfahren zur Herstellung der Phthalocyanin-Farbstoffe nach Anspruch 1, **dadurch gekennzeichnet, dass**
ein aromatisches Amin der allgemeinen Formel (IV A), 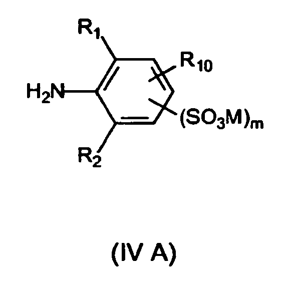 worin R₁, R₂, R₁₀ und m die gleiche Bedeutung wie in Anspruch 1 haben,
der allgemeinen Formel (IV B), 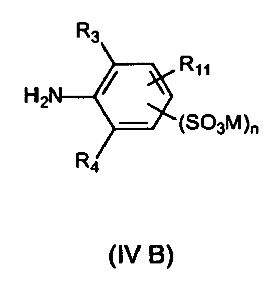 worin R₃, R₄, R₁₁ und n die gleiche Bedeutung wie in Anspruch 1 haben,
der allgemeinen Formel (IV C), 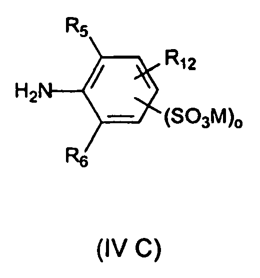 worin R₅, R₆, R₁₂ und o die gleiche Bedeutung wie in Anspruch 1 haben,
und
der allgemeinen Formel (IV D), 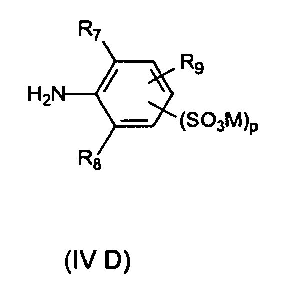 worin R₇, R₈, R₉ und p die gleiche Bedeutung wie in Anspruch 1 haben,
mit dem Carbonsäurechlorid der Formel (V) 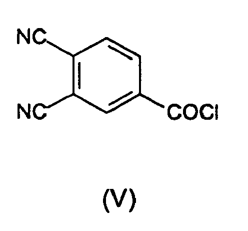 unter Bedingungen umgesetzt werden, dass die Amide der allgemeinen Formeln 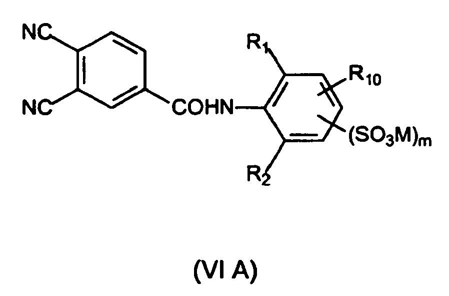 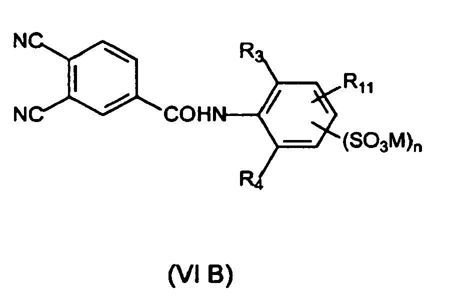 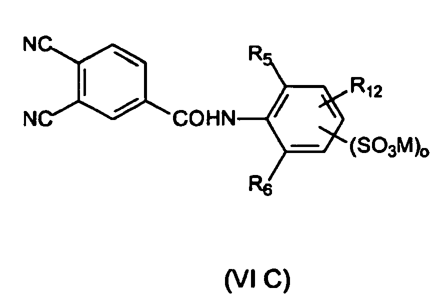 und 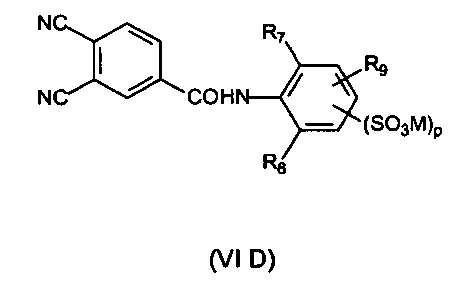 gebildet werden,
und
ein Gemisch der Amide der allgemeinen Formeln (VI A), (VI B), (VI C) und (VI D) mit einem Salz des Metalls Me umgesetzt wird, worin Me die gleiche Bedeutung wie in Anspruch 1 hat.

8. Verwendung der Phthalocyanin-Farbstoffe nach einem oder mehreren der Ansprüche 1 bis 6 zum Aufzeichnen von Schrift und Bildern auf Aufzeichnungsmaterialien, zum Färben und Bedrucken von natürlichen oder synthetischen Fasermaterialen, nanoporösen Materialien, Leder und Aluminium.

9. Flüssige Farbstoffpräparationen, welche mindestens einen Phthalocyanin-Farbstoff oder eine Mischung von Phthalocyanin-Farbstoffen nach einem oder mehreren der Ansprüche 1 bis 6 enthalten.

10. Tinten für den Tintenstrahldruck, welche mindestens einen Phthalocyanin-Farbstoff oder eine Mischung von Phthalocyanin-Farbstoffen nach einem oder mehreren der Ansprüche 1 bis 6 enthalten.

11. Tinten für den Tintenstrahldruck gemäss Anspruch 10, welche zusätzlich einen oder mehrere weitere Phthalocyanin-Farbstoffe enthalten.

## Claims

1. Phthalocyanine dyes of general formula (II) 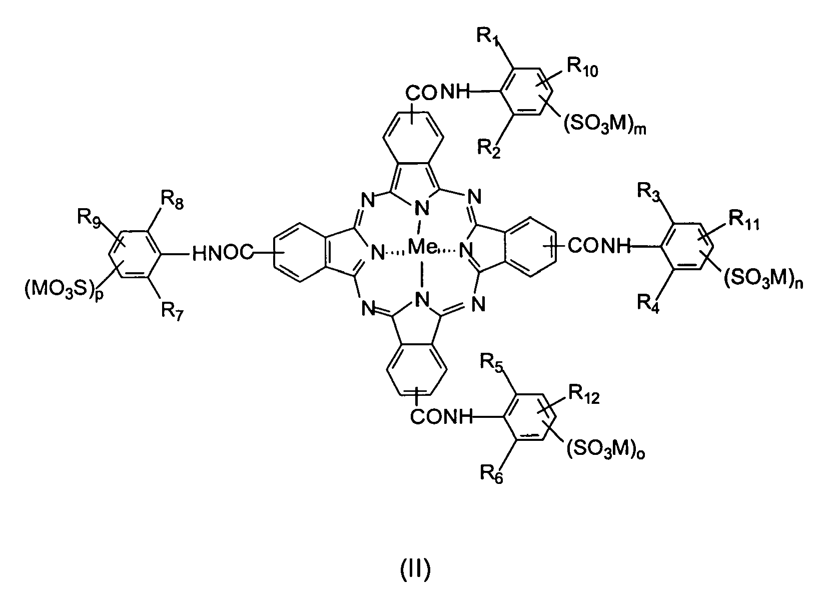 wherein
R₁ - R₈ independently represent a linear or branched alkyl group having up to 8 carbon atoms;
R₉ - R₁₂ independently represent a hydrogen atom, a linear or branched al- kyl group having up to 8 carbon atoms or a halogen atom;
Me represents a copper atom, a zinc atom, a nickel atom, a manga- nese atom, a cobalt atom, an aluminium atom or a vanadium atom;
M represents a hydrogen atom, a metal cation or an aromatic am- monium cation, which optionally may be substituted by one or more alkyl or substituted alkyl groups each having from 1 to 18 carbon atoms, or an aliphatic ammonium cation, which optionally may be substituted by one or more alkyl or substituted alkyl or hy- droxyalkoxyalkyl groups, each having from 1 to 18 carbon atoms;
and
m, n , o, p independently are 1 or 2.

2. Phthalocyanine dyes according to claim 1, **characterized by** the fact that R₁ - R₈, R₉ - R₁₂, Me and M are as defined in claim 1
and
m, n , o, p are equal to 1.

3. Phthalocyanine dyes according to claim 1, **characterized by** the fact that R₁ - R₈, R₉ - R₁₂, m, n, o, p and M are as defined in claim 1
and
Me represents a copper atom or a zinc atom.

4. Phthalocyanine dyes of general formula (III) according to claim 1, 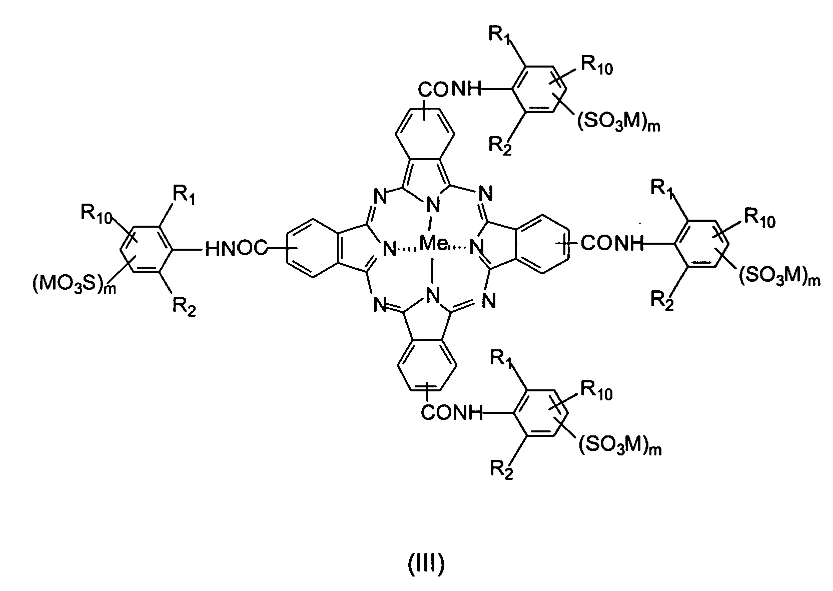 wherein
R₁, R₂, R₁₀, Me, M and m are as defined in claim 1.

5. Phthalocyanine dyes according to claim 4, **characterized by** the fact that R₁, R₂, R₁₀, Me and M are as defined in claim 4
and
m is equal to 1.

6. Phthalocyanine dyes according to claim 4, **characterized by** the fact that R₁, R₂, R₁₀, m and M are as defined in claim 4
and
Me represents a copper atom or a zinc atom.

7. Method of preparation of the phthalocyanine dyes according to claim 1, **characterized by** the fact that
an aromatic amine of general formula (IV A), 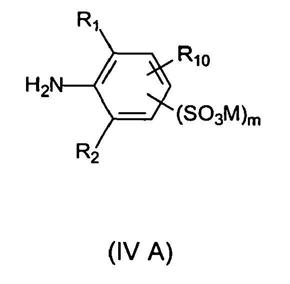 wherein R₁, R₂, R₁₀ and m are as defined in claim 1;
of general formula (IV B), 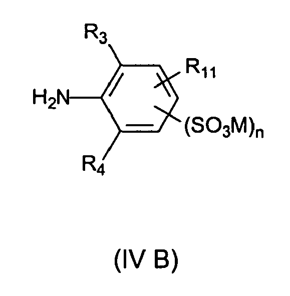 wherein R₃, R₄, R₁₁ and n are as defined in claim 1;
of general formula (IV C), 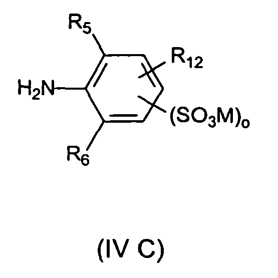 wherein R₅, R₆, R₁₂ and o are as defined in claim 1;
and
of general formula (IV D), 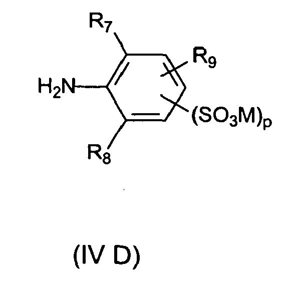 wherein R₇, R₈, R₁₂ and p are as defined in claim 1,
is reacted with the acyl chloride of formula (V) 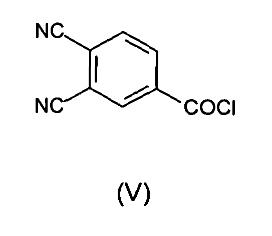 under conditions that the amides of general formulas 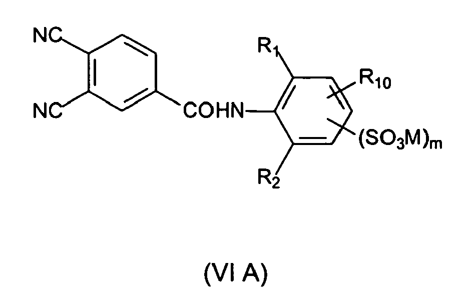 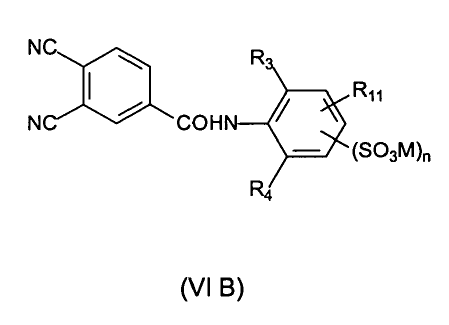 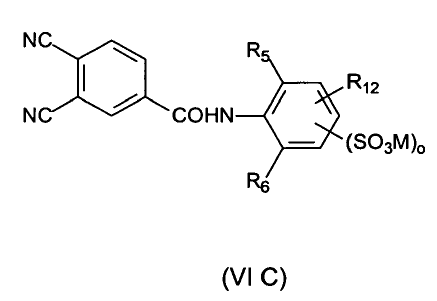 and 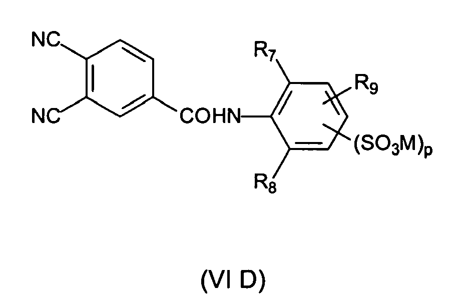 are formed,
and
a mixture of the amides of general formulas (VI A), (VI B), (VI C) and (VI D) is reacted with a salt of metal Me wherein Me is as defined in claim 1.

8. Process for recording text and images on recording sheets and for dying and printing natural or synthetic fibre materials, nanoporous materials, leather and aluminium by applying thereto a phthalocyanine dye according to one or more of claims 1 to 6.

9. Liquid dye preparations comprising at least one phthalocyanine dye or a mixture of phthalocyanine dyes according to one or more of claims 1 to 6.

10. Inks for ink jet printing, comprising at least one phthalocyanine dye or a mixture of phthalocyanine dyes according to one or more of claims 1 to 6.

11. Inks for ink jet printing according to claim 10, comprising in addition one or more other phthalocyanine dyes.

## Revendications

1. Colorants phthalocyanines de formule générale (II) 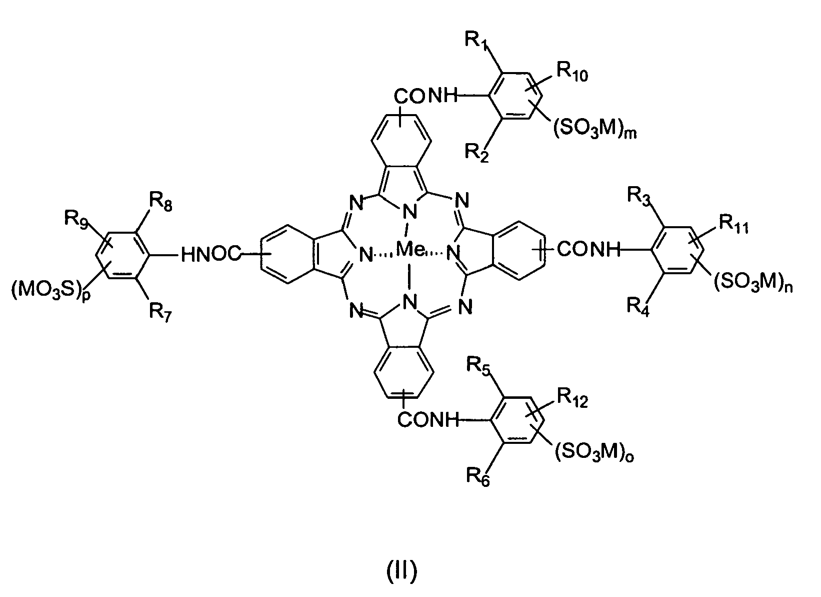 dans laquelle
R₁ - R₈ représentent indépendamment un radical alkyle branché ou non- branché ayant jusqu'à 8 atomes de carbone;
R₉ - R₁₂ représentent indépendamment un atome d'hydrogène, un radical alkyle branché ou non-branché ayant jusqu'à 8 atomes de car- bone ou un atome d'halogène;
Me représente un atome de cuivre, un atome de zinc, un atome de nickel, un atome de manganèse, un atome de cobalt, un atome d'aluminium ou un atome de vanadium;
M représente un atome d'hydrogène, un cation métallique ou un ca- tion ammonium optionnellement substitué par un ou plusieurs ra- dicaux alkyle ou alkyle substitué ou hydroxyalcoxyalkyle ayant chacun de 1 à 18 atomes de carbone;
et
m, n, o, p valent indépendamment 1 ou 2.

2. Colorants phthalocyanines selon la revendication 1, **caractérisés par le fait que**
R₁ - R₈, R₉ - R₁₂, Me et M sont définis comme dans la revendication 1
et
m, n , o, p valent 1.

3. Colorants phthalocyanines selon la revendication 1, **caractérisés par le fait que**
R₁ - R₈, R₉ - R₁₂, m, n, o, p et M sont définis comme dans la revendication 1
et
Me représente un atome de cuivre ou un atome de zinc.

4. Colorants phthalocyanines de formule générale (III) selon la revendication 1, 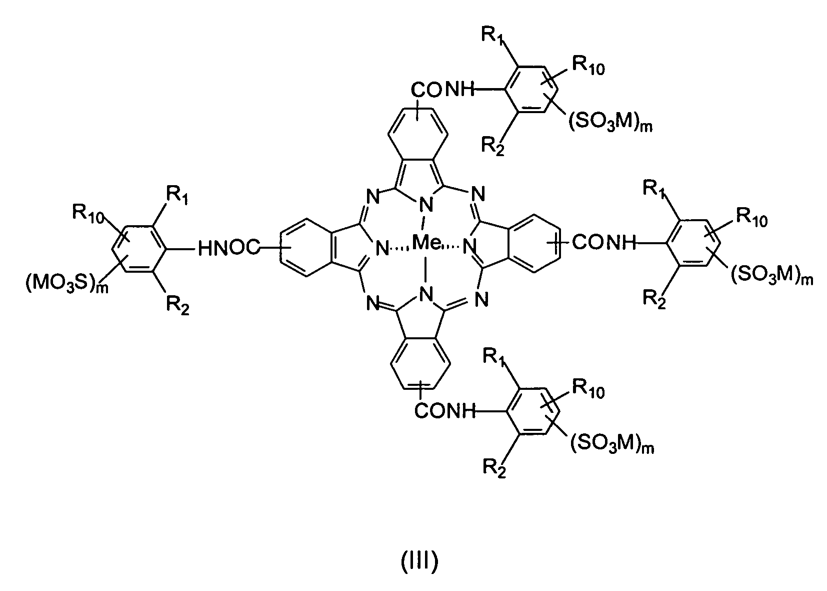 dans laquelle
R₁, R₂, R₁₀, Me, M et m sont définis comme dans la revendication 1.

5. Colorants phthalocyanines selon la revendication 4, **caractérisés par le fait que**
R₁, R₂, R₁₀, Me et M sont définis comme dans la revendication 4 et
m vaut 1.

6. Colorants phthalocyanines selon la revendication 4, **caractérisés par le fait que**
R₁, R₂, R₁₀, m et M sont définis comme dans la revendication 4
et
Me représente un atome de cuivre ou un atome de zinc.

7. Procédé de préparation des colorants phthalocyanines selon la revendication 1, **caractérisé par le fait que**
une amine aromatique de formule générale (IV A), 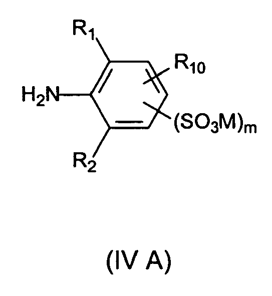 dans laquelle R₁, R₂, R₁₀ et m sont définis comme dans la revendication 1,
de formule générale (IV B), 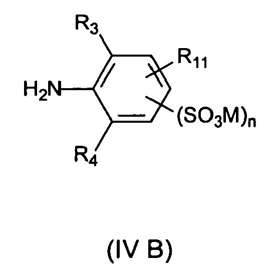 dans laquelle R₃, R₄, R₁₁ et n sont définis comme dans la revendication 1,
de formule générale (IV C), 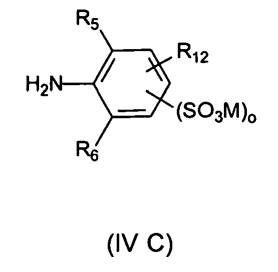 dans laquelle R₅, R₆, R₁₂ et o sont définis comme dans la revendication 1,
et
de formule générale (IV D), 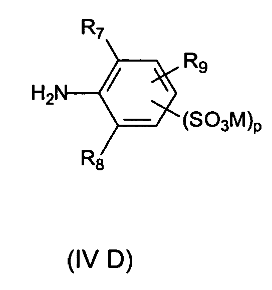 dans laquelle R₇, R₈, R₉ et p sont définis comme dans la revendication 1,
réagissent avec le chlorure de l'acide carboxylique de formule (V) 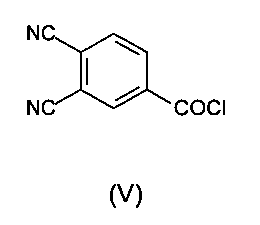 sous des conditions où les amides de formules générales 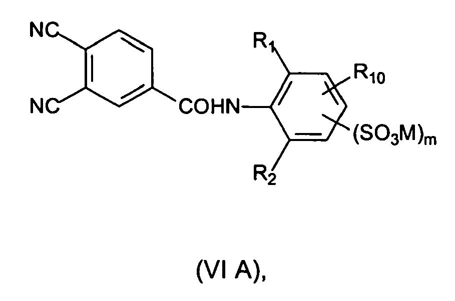 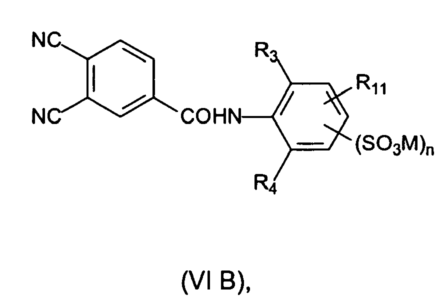 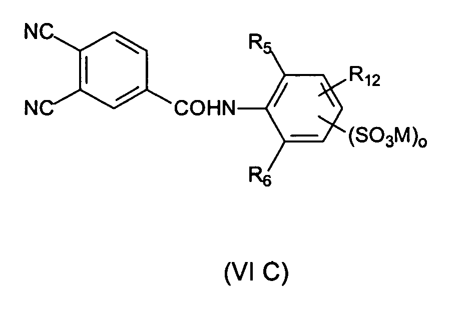 et 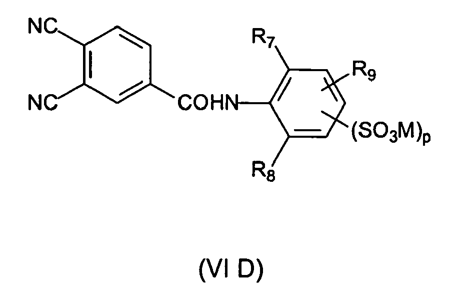 sont formés,
puis
un mélange des amides de formules générales (VI A), (VI B), (VI C) et (VI D) est traité avec un sel du métal Me, comme défini dans la revendication 1.

8. Utilisation des colorants phthalocyanines selon une ou plusieurs des revendications 1 à 6 pour l'enregistrement de caractères ou d'images sur des feuilles d'enregistrement, pour la teinture et l'impression de matériaux fibreux naturels ou synthétiques, de matériaux nanoporeux, du cuir et d'aluminium.

9. Préparations liquides de colorants qui comprennent ou moins un colorant phthalocyanine ou un mélange de colorants phthalocyanines selon une ou plusieurs des revendications 1 à 6.

10. Encres d'impression selon la méthode du jet d'encre qui comprennent au moins un colorant phthalocyanine ou un mélange de colorants phthalocyanines selon une ou plusieurs des revendications 1 à 6.

11. Encres d'impression selon la méthode du jet d'encre selon la revendication 10 qui comprennent un ou plusieurs colorants phthalocyanines supplémentaires.
